# EUROPÄISCHE PATENTSCHRIFT

(11) **EP 0 803 408 B1**
(45) Veröffentlichungstag und Bekanntmachung des Hinweises auf die Patenterteilung: **26.06.2002**
(21) Anmeldenummer: 97106622.0
(22) Anmeldetag: 22.04.1997
(51) Int. Cl.: B60R 21/20

(54) **Bauteilesatz für ein Airbag-Modul**
Set of parts for assembly of an airbag module
Ensemble de pièces pour le montage d'un module de coussin gonflable

(30) Priorität: 27.04.1996 DE 19616941
(43) Veröffentlichungstag der Anmeldung: 29.10.1997
(73) Patentinhaber: TRW Automotive Safety Systems GmbH & Co. KG, 63743 Aschaffenburg (DE)
(72) Erfinder: Werner, Heribert, 63796 Kahl (DE); Bohn, Stefan, 63773 Goldbach (DE)
(74) Vertreter: Degwert, Hartmut, Dipl.-Phys.

(56) Entgegenhaltungen:
- US-A- 5 069 480
- US-A- 5 342 082
- US-A- 5 407 223

## Beschreibung

Die Erfindung betrifft einen Bauteilesatz zur Herstellung eines Airbag-Moduls für die Beifahrerseite in einem Kraftfahrzeug.

Ein gattungsgemäßer Bauteilesatz ist aus der US 5 407 223 A bekannt.

Airbag-Module für die Beifahrerseite in einem Kraftfahrzeug werden von der Automobilindustrie in zunehmendem Maße als Option oder gar als Serienausstattung angeboten. Andererseits werden große Anstrengungen unternommen, die Automobilherstellung zu rationalisieren, um international wettbewerbsfähig zu bleiben, d.h. die Mehrausstattung mit Beifahrer-Airbag muß mit geringstmöglichem Kostenaufwand realisiert werden.

Daraus resultiert die Aufgabe, einen Bauteilesatz der eingangs genannten Art hinsichtlich Materialaufwand, Herstellungs- und Montagekosten möglichst günstig zu konzipieren.

Diese Aufgabe wird erfindungsgemäß durch einen Bauteilesatz gelöst, der gekennzeichnet ist durch ein Rohrelement zur Aufnahme eines zylindrischen Druckgasbehälters sowie durch zwei auf dem Rohrelement nach Art einer Schlauchklemme festlegbaren, identischen Stirnteilen in Form von Abschnitten eines Strangpressprofils oder eines Blechformteils zur längsseitigen Begrenzung eines Raumes, der zur Aufnahme eines zusammengefalteten Airbags oberhalb des Rohrelements vorgesehen ist.

Der Erfindung liegt die Erwägung zugrunde, daß die Hauptteile eines Airbag-Moduls, nämlich Airbag und Druckgasbehälter, nicht unbedingt in einem geschlossenen Gehäuse untergebracht werden müssen, daß es vielmehr genügt, oberhalb des Druckgasbehälters einen Raum für den zusammengefalteten Airbag vorzusehen, der den Airbag-Funktionen entspricht und im übrigen möglichst materialsparend umgrenzt ist.

Zum Aufblasen eines Airbags ist es vorteilhaft, wenn das in bekannter Weise schlagartig freigesetzte Druckgas möglichst über einen großen Querschnitt in den zusammengefalteten Airbag einströmt. Zu diesem Zweck ist ein Gasleitungssystem erforderlich, das den über einen kleinen Berstquerschnitt austretenden Gasstrom auf einen größeren Strömungsquerschnitt verteilt. Zu diesem Zweck sind bei herkömmlichen Behältern für Beifahrer-Airbags zwischen dem Druckgasbehälter und dem Gaseintrittsquerschnitt am Airbag stets Bauteile mit einer Mehrzahl von Austrittsöffnungen vorgesehen worden, die entweder als Teil der Gehäusewandung oder als gesonderte Einlage gestaltet sind.

Bei der Erfindung ist dieser Teil der Airbag-Funktion durch ein den Druckgasbehälter umgebendes Rohrelement realisiert, das die erforderlichen Austrittsöffnungen enthält und als Basisteil des Bausatzes für die Form- und Gestaltfestigkeit der gesamten Anordnung sorgt.

Die Stirnteile sind als Abschnitte eines geschlitzten, mit dem Rohrelement koaxialen Strangpreßprofils ausgebildet und in der Art von Schlauchklemmen auf dem Rohrelement festklemmbar. Dabei kann gleichzeitig der Airbag auf dem Rohrelement befestigt werden. Die Stirnteile dienen außerdem zur längsseitigen Begrenzung eines Raumes, der zur Aufnahme eines zusammengefalteten Airbags oberhalb des Rohrelements vorgesehen ist.

Damit sind die wichtigsten Elemente des erfindungsgemäßen Bauteilesatzes festgelegt. Diese Elemente sind kostengünstig herstellbar und sehr einfach zu montieren.

Abwandlungen, Ergänzungen und Weiterbildungen dieses Grundprinzips sind in den Ansprüchen 2 bis 13 beschrieben. Weitere Einzelheiten werden anhand des in den Figuren 1 bis 5 dargestellten Ausführungsbeispiels näher erläutert.
Es zeigen:
- Fig.1: ein Rohrelement in perspektivischer Darstellung,
- Fig.2: zwei Stirnteile mit Hilfsrohren,
- Fig.3: einen Bauteilesatz mit Rohrelement, Stirnteilen und Hilfsrohren,
- Fig.4: einen Querschnitt durch einen Bauteilesatz ohne Druckgasbehälter jedoch mit Abdeckkappe und
- Fig.5: einen Längsschnitt durch den Bauteilesatz mit Druckgasbehälter

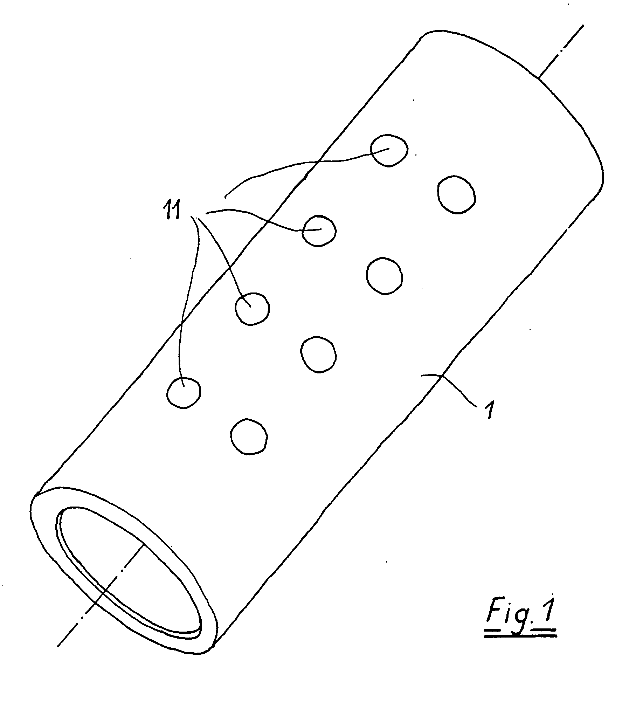

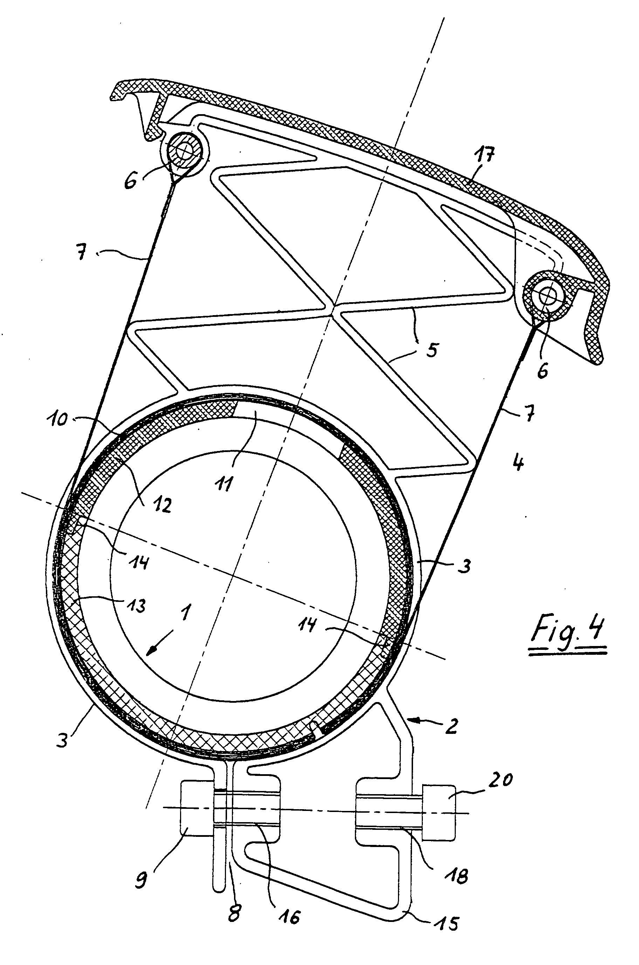

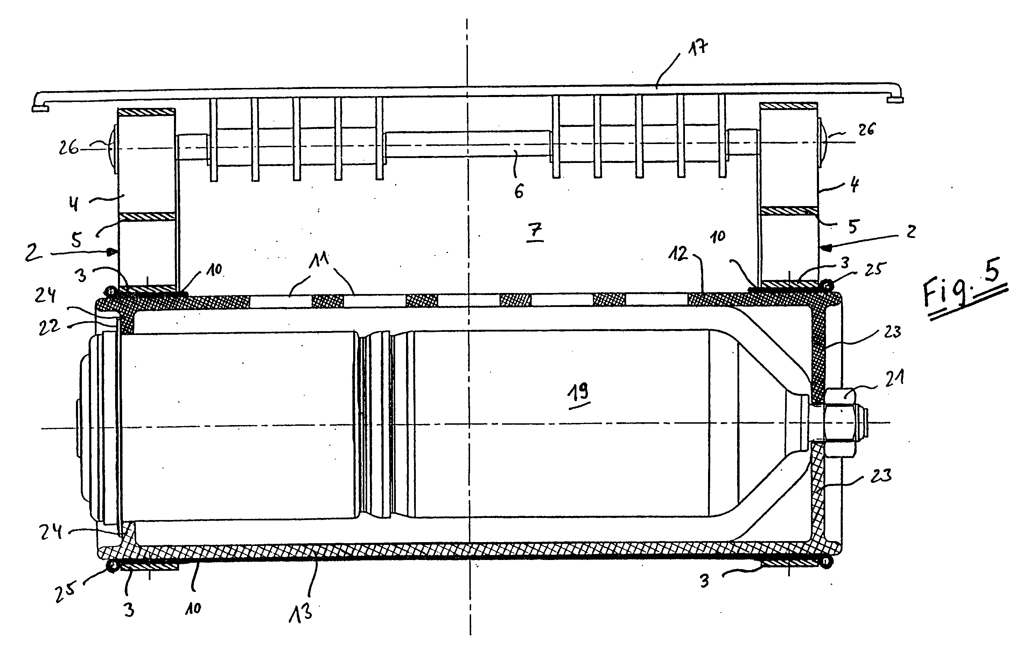

Das Rohrelement 1 gemäß Fig. 1 ist hinsichtlich Durchmesser und Länge auf den darin unterzubringenden Druckgasbehälter (19 Fig. 5) abgestimmt. Es besitzt eine Mehrzahl von Auslaßöffnungen 11, deren Durchmesser und Anordnung dem jeweiligen Anwendungsfall anpaßbar sind. Je nach dem, wie der Druckgasbehälter im Rohrelement 1 befestigt werden soll, kann dieses einteilig oder zweiteilig mit einem Fügebereich parallel zur Rohrachse ausgeführt werden (vergl. Fig. 4). Im zweiten Fall dienen die Stirnteile gleichzeitig dazu, die beiden Halbschalen zu einem starren Rohrelement zu verbinden.

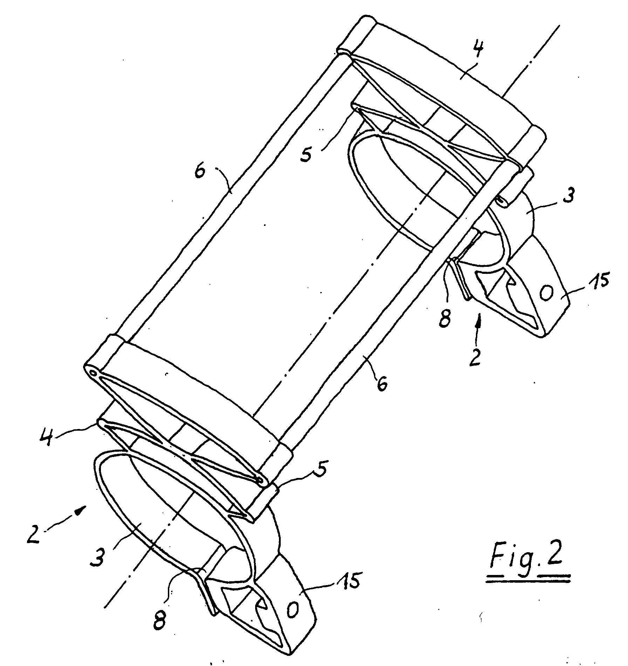

Fig. 2 zeigt in perspektivischer Darstellung Stirnteile 2 aus Abschnitten eines Strangpreßprofils, dessen Längsachse parallel zur Achse des Rohrelements verläuft. Die Stirnteile 2 umfassen einen das Rohrelement umschließenden Bereich 3 und einen sich in einer Ebene senkrecht zur Achse des Rohrelements und von diesem weg erstreckenden Bereich 4, dessen Höhe gleich oder größer ist als die Höhe eines Raumes, der zur Unterbringung eines über der Projektionsfläche des Rohrelements zusammengefalteten Airbags erforderlich ist. Auf diese Weise wird der Raum für den Airbag in Längsrichtung begrenzt, ohne daß hierfür ein durchgehendes Wandungsteil erforderlich wäre. Der Querschnitt des Strangpreßprofils kann vielmehr sehr materialsparend auf die erforderliche Festigkeit in diesem Bereich abgestimmt und beispielsweise als leicht verformbares Gitterwerk ausgebildet werden. Dabei können Aspekte der Energieumwandlung durch plastische Verformung im Falle einer schlagartigen Beanspruchung senkrecht zur Rohrachse berücksichtigt werden. Schließlich hat man als freien Parameter noch die Breite der Abschnitte des Strangpreßprofils, so daß dem Konstrukteur mit den Stimteilen eine Fülle von Möglichkeiten an die Hand gegeben ist, den erfindungsgemäßen Bauteilesatz an unterschiedliche Randbedingungen anzupassen.

In Fig. 2 sind die beiden Stirnteile 2 über zwei Hilfsrohre oder Hilfsstangen 6 miteinander verbunden, wozu das Strangpreßprofil im oberen Bereich entsprechende Bohrungen aufweist. Die Hilfsrohre bzw. Hilfsstangen 6 können in die Stirnteile 2 eingepreßt oder aber in diesen in anderer geeigneter Weise befestigt werden, wobei der axiale Abstand der Stirnteile - die einen Schlitz 8 aufweisen - durch deren Aufklemmen auf das Rohrelement festlegbar ist. Bei entsprechender Ausgestaltung der Befestigung der Hilfsstangen bzw. Hilfsrohre 6 in den Stirnteilen 2 kann der axiale Abstand der Stirnteile 2 auch allein oder zusätzlich durch die Hilfsrohre bzw. Hilfsstangen 6 festgelegt werden.

Die Stirnteile 2 weisen außerdem Anschlüsse 15 zur Befestigung des Airbag-Moduls im Kraftfahrzeug auf. Diese Anschlüsse 15 lassen sich ebenfalls an verschiedene Bedürfnisse anpassen, soweit diese Anpassungen auf durch Strangpressen hergestellten Querschnittsformen beruhen.

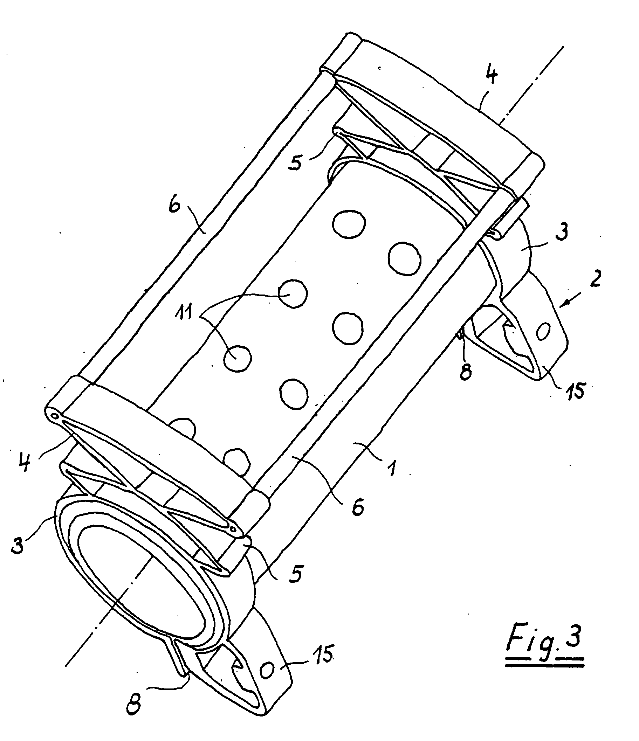

In Fig. 3 sind die Bauteile gemäß Fig. 1 und 2 in zusammengebautem Zustand dargestellt. Die Darstellung ist aus sich heraus verständlich und erfordert keine weiteren Erläuterungen.

Fig. 4 zeigt im Querschnitt ein zweiteiliges Rohrelement 1 mit den Halbschalen 12 und 13 und einem zur Rohrachse parallelen Fügebereich 14. Die Stirnteile 2 umschließen mit ihrem Bereich 3 das Rohrelement 1, wobei mittels einer Schraube 9 der Schlitz 8 verkleinert wird und so eine Klemmverbindung entsteht, mittels derer nicht nur die Halbschalen 12 und 13 zu einer Baueinheit zusammengefügt werden, sondern über entsprechende Anschlußbereiche auch der Airbag 10 auf dem Rohrelement 1 festgelegt wird. Die Halbschale 12 weist Austrittsöffnungen 11 auf, die in bekannter Weise dafür sorgen, daß der aus dem Druckgasbehälter austretende Gasstrom etwas gedrosselt und über den gesamten Eintrittsquerschnitt des Airbags verteilt wird.

Nach oben schließt sich an den Bereich 3 ein Bereich 4 an, der als Gitterwerk 5 ausgebildet ist und den Raum für den Airbag längsseitig begrenzt. Der Bereich 4 weist im oberen Bereich Bohrungen für die Aufnahme von Hilfsrohren oder Hilfsstangen 6 auf, die dazu dienen, eine um das Rohrelement 1 herumgeschlungene Stoffbahn 7 unter einer gewissen Vorspannung zu halten, die die querseitige Begrenzung für den Airbag-Raum bildet.

Die Hilfsrohre oder Hilfsstangen 6 können gleichzeitig zur schwenkbaren Lagerung einer Abdeckkappe 17 dienen, die auf der gegenüberliegenden Seite mit den Stirnteilen 2 verklipst werden kann, wozu der Strangpreßquerschnitt entsprechend ausgebildet ist.

Am unteren Ende sind die Stirnteile 2 noch mit Anschlüssen 15 zur Befestigung des Airbag-Moduls im Kraftfahrzeug ausgestattet. Dazu sind in einem entsprechend verdickt ausgebildeten Bereich der Anschlüsse 15 Bohrungen 18 vorgesehen, in die Schrauben 20, vorzugsweise selbstschneidend eingeschraubt werden können. Die Bohrungen 18 sind zweckmäßigerweise so angeordnet, daß sie gleichzeitig mit den Bohrungen 16 herstellbar sind, die für das Einsetzen der Schrauben 9 zur Herstellung der Klemmverbindung zwischen den Stirnteilen 2 und dem Rohrelement 1 benötigt werden.

Fig. 5 zeigt den zu Fig. 4 gehörenden Längsschnitt des Ausführungsbeispiels mit eingebautem Druckgasbehälter 19. In diesem Fall sind die Halbschalen 12 und 13 so ausgeführt, daß der Druckgasbehälter 19 mittels einer Ringscheibe 22 und einer Schraube 21 zwischen flanschartigen Fortsätzen 23, 24 der Halbschalen 12, 13 einspannbar ist. Dabei kann der Druckgasbehälter 19 zur weiteren Stabilisierung des zusammengefügten Bauteilesatzes mit herangezogen werden, so daß weitere Materialeinsparungen realisierbar sind.

Der Airbag 10 ist außen um das Rohrelement 1 herumgeschlungen und mittels der Bereiche 3 der Stirnteile 2 auf diesem festgelegt, d.h. zwischen Rohrelement 1 und den Bereichen 3 nach dem Prinzip der Schlauchklemmen eingeklemmt. Im oberen Teil ist der zusammengefaltete Teil des Airbags 10 nicht dargestellt, um die Übersicht nicht zu stören. Damit der Airbag 10 aus der Klemmverbindung nicht herausrutschen kann, ist in einer Materialdopplung ein umlaufender Ring 25 vorgesehen.

Die obere Halbschale 12 weist Austrittsöffnungen 11 für das Druckgas auf. Die Stirnteile 2 sind in den oberen Bereichen 4 als Gitterwerk 5 ausgeführt und nehmen die Enden der Hilfsrohre oder Hilfsstangen 6 auf, wobei im dargestellten Fall Schrauben 26 zur Befestigung benutzt werden. An den Hilfsrohren oder Hilfsstangen 6 ist außerdem die ebenfalls um das Rohrelement 1 herumgeschlungene Stoffbahn 7 abschnittsweise befestigt und die Abdeckkappe 17 zwischen diesen Abschnitten schwenkbar gelagert.

## Patentansprüche

1. Bauteilesatz zur Herstellung eines Airbag-Moduls für die Beifahrerseite in einem Kraftfahrzeug, **gekennzeichnet durch** ein Rohrelement (1) zur Aufnahme eines zylindrischen Druckgasbehälters sowie **durch** zwei auf dem Rohrelement (1) nach Art einer Schlauchklemme festlegbaren, identischen Stirnteilen (2) in Form von Abschnitten eines Strangpressprofils oder eines Blechformteils zur längsseitigen Begrenzung eines Raumes, der zur Aufnahme eines zusammengefalteten Airbags oberhalb des Rohrelements (1) vorgesehen ist.

2. Bauteilesatz nach Anspruch 1, **dadurch gekennzeichnet, daß** die Stirnteile (2) einen das Rohrelement (1) umschließenden Bereich (3) und einen sich in einer Ebene senkrecht zur Achse des Rohrelements (1) und von diesem weg erstreckenden Bereich (4) aufweisen, dessen Höhe gleich oder größer ist als die Höhe eines Raumes, der zur Unterbringung eines über der Projektionsfläche des Rohrelements (1) zusammengefalteten Airbags erforderlich ist.

3. Bauteilesatz nach Anspruch 2, **dadurch gekennzeichnet, daß** die sich vom Rohrelement (1) weg erstreckenden Bereiche (4) der Stirnteile (2) in Richtung ihrer Erstreckung als leicht verformbares Gitterwerk (5) ausgebildet sind.

4. Bauteilesatz nach einem der Ansprüche 1 bis 3, ferner **gekennzeichnet durch** zwei achsparallel und beabstandet zu dem Rohrelement (1) zwischen den Stirnseiten (2) einspannbaren Hilfsrohren (6) sowie **durch** eine Stoffbahn (7), die - um das Rohrelement (1) herumgeschlungen und an den Hilfsrohren (6) befestigt - den Raum für den Airbag achsparallel zum Rohrelement (1) querseitig begrenzt.

5. Bauteilesatz nach einem der Ansprüche 1 bis 4, **dadurch gekennzeichnet, daß** die Stirnteile (2) einen Schlitz (8) aufweisen und unter elastischer Verformung mittels Schrauben (9) auf dem Rohrelement (1) festlegbar sind.

6. Bauteilesatz nach Anspruch 5, **dadurch gekennzeichnet, daß** der Airbag (10) mittels der Stirnteile (2) auf dem Rohrelement (1) festklemmbar ist.

7. Bauteilesatz nach einem der Ansprüche 1 bis 6, **dadurch gekennzeichnet, daß** das Rohrelement (1) mit Austrittsöffnungen (11) für das Druckgas versehen ist.

8. Bauteilesatz nach Anspruch 7, **dadurch gekennzeichnet, daß** das Rohrelement (1) aus zwei Halbschalen (12, 13) mit zur Rohrachse parallelem Fügebereich (14) besteht, die mittels der Stirnteile (2) miteinander verbindbar sind.

9. Bauteilesatz nach einem der Ansprüche 1 bis 8, **dadurch gekennzeichnet, daß** die Stirnteile (2) Anschlüsse (15) zur Befestigung des Airbag-Moduls im Kraftfahrzeug aufweisen.

10. Bauteilesatz nach Anspruch 9, **dadurch gekennzeichnet, daß** die Anschlüsse (15) Bohrungen (8) umfassen, die gleichzeitig mit den Bohrungen (16) für das Festklemmen der Stirnteile (2) auf dem Rohrelement (1) herstellbar sind.

11. Bauteilesatz nach einem der Ansprüche 1 bis 10, **dadurch gekennzeichnet, daß** eines der Hilfsrohre (6) für die scharnierartige Befestigung einer Airbag-Abdeckkappe (17) dient und daß die Stirnteile (2) im Bereich des anderen Hilfsrohres (6) zum Verklipsen der Airbag-Abdeckkappe (17) ausgebildet sind.

12. Bauteilesatz nach einem der Ansprüche 1 bis 10, **gekennzeichnet durch** eine den Austrittsquerschnitt für den Airbag zwischen den Hilfsrohren (6) überspannende, aufreißbare Schutzabdeckung.

13. Bauteilesatz nach einem der Ansprüche 1 bis 12, **dadurch gekennzeichnet, daß** die Stirnteile (2) aus Kunststoff oder einer Leichtmetallegierung bestehen.

## Claims

1. An assembly for manufacturing an airbag module for the passenger side in a motor vehicle, **characterized by** a tubular element (1) for accommodating a cylindrical reservoir of compressed gas and by two identical frontal components (2) in the form of portions of extruded section or of a shaped sheet metal part which are adapted to be fixed in place on the tubular element (1) like hose clips so as to longitudinally demarcate a space provided above the tubular element (1) for accommodating a folded airbag.

2. The assembly according to claim 1, **characterized in that** the frontal components (2) have an area (3) which encloses the tubular element (1) and an area (4) which extends in a plane perpendicular to the axis of the tubular element (1) and away from the latter, the height of the area (4) being equal to or greater than the height of a space required for accommodating an airbag folded over the projected surface area of the tubular element (1).

3. The assembly according to claim 2, **characterized in that** the areas (4) of the frontal components (2) which extend away from the tubular element (1) are configured as an easily deforming openwork (5) in their direction of extension.

4. The assembly according to any of claims 1 to 3, further **characterized by** two auxiliary tubes (6) adapted to be clamped between the frontal components (2) axially parallel to and spaced apart from the tubular element (1), and by a web (7) of material which, wrapped around the tubular element (1) and secured to the auxiliary tubes (6), laterally demarcates the space for the airbag parallel to the axis of the tubular element (1).

5. The assembly according to any of claims 1 to 4, **characterized in that** the frontal components (2) each have a slot (8) and are adapted to be forced against the tubular element (1) by means of screws (9) while deforming elastically.

6. The assembly according to claim 5, **characterized in that** the airbag (10) is adapted to be clamped on the tubular element (1) by means of the frontal components (2).

7. The assembly according to any of claims 1 to 6, **characterized in that** the tubular element (1) is provided with outlet openings (11) for the compressed gas.

8. The assembly according to claim 7, **characterized in that** the tubular element (1) is comprised of two halves (12, 13) joined at a seam (14) parallel to the axis of the tube and adapted to be connected with each other by means of the frontal components (2).

9. The assembly according to any of claims 1 to 8, **characterized in that** the frontal components (2) have connectors (15) for securing the airbag module in the motor vehicle.

10. The assembly according to claim 9, **characterized in that** the connectors (15) have bores (8) which can be produced simultaneously with the bores (16) for clamping the frontal components (2) in place on the tubular element (1).

11. The assembly according to any of claims 1 to 10, **characterized in that** one of the auxiliary tubes (6) acts like a hinge for fastening an airbag covering cap (17) and that the frontal components (2) in the vicinity of the other auxiliary tube (6) are designed for the airbag covering cap (17) to snap into place.

12. The assembly according to any of claims 1 to 10, **characterized by** a tear-open protective cover which spans the cross-section of the exit for the airbag between the auxiliary tubes (6).

13. The assembly according to any of claims 1 to 12, **characterized in that** the frontal components (2) are made of plastic or a light metal alloy.

## Revendications

1. Ensemble de pièces pour réaliser un module de coussin à gaz pour le côté passager dans un véhicule automobile, **caractérisé par** un élément tubulaire (1) destiné à recevoir un réservoir cylindrique de gaz sous pression ainsi que par deux pièces frontales (2) identiques sous forme de portions d'un profilé extrudé ou d'une pièce moulée en tôle, susceptibles d'être fixées sur l'élément tubulaire (1) à la manière d'un collier de serrage, pour délimiter le long côté d'un espace qui est prévu pour recevoir un coussin à gaz replié au-dessus de l'élément tubulaire (1).

2. Ensemble de pièces selon la revendication 1, **caractérisé en ce que** les pièces frontales (2) présentent une région (3) entourant l'élément tubulaire (1) et une région (4) s'étendant dans un plan perpendiculaire à l'axe de l'élément tubulaire (1) et en éloignement de celui-ci, dont la hauteur est égale ou supérieure à la hauteur d'un espace qui est nécessaire pour loger un coussin à gaz replié au-dessus de la surface de projection de l'élément tubulaire (1).

3. Ensemble de pièces selon la revendication 2, **caractérisé en ce que** les régions (4) des parties frontales (2), qui s'étendent en éloignement de l'élément tubulaire (1) sont réalisées sous forme de treillis (5) facilement déformable.

4. Ensemble de pièces selon l'une quelconque des revendications 1 à 3, **caractérisé en outre par** deux tubes auxiliaires (6) qui peuvent être serrés entre les parties frontales (2) en parallèle à l'axe et à distance de l'élément tubulaire (1) ainsi que par une bande de tissu (7) qui, enroulée autour de l'élément tubulaire (1) et fixée aux tubes auxiliaires (6), délimite transversalement l'espace pour le coussin à gaz parallèlement à l'axe de l'élément tubulaire (1).

5. Ensemble de pièces selon l'une quelconque des revendications 1 à 4, **caractérisé en ce que** les pièces frontales (2) présentent une fente (8) et **en ce qu'**elles peuvent être fixées à l'élément tubulaire (1) au moyen de vis (9) et sous déformation élastique.

6. Ensemble de pièces selon la revendication 5, **caractérisé en ce que** le coussin à gaz (10) peut être serré à bloc sur l'élément tubulaire (1) au moyen des pièces frontales (2).

7. Ensemble de pièces selon l'une quelconque des revendications 1 à 6, **caractérisé en ce que** l'élément tubulaire (1) est pourvu d'ouvertures de sortie (11) pour le gaz sous pression.

8. Ensemble de pièces selon la revendication 7, **caractérisé en ce que** l'élément tubulaire (1) est constitué par deux semi-coques (12, 13) avec zone de jointure (14) parallèle à l'axe du tube, qui peuvent être reliées l'une à l'autre au moyen des pièces frontales (2).

9. Ensemble de pièces selon l'une quelconque des revendications 1 à 8, **caractérisé en ce que** les pièces frontales (2) présentent des raccordements (15) pour fixer le module de coussin à gaz dans le véhicule.

10. Ensemble de pièces selon la revendication 9, **caractérisé en ce que** les raccordements (15) comprennent des perçage (8) qui peuvent être réalisés simultanément avec les perçages (16) servant au serrage à bloc des pièces frontales (2) sur l'élément tubulaire (1).

11. Ensemble de pièces selon l'une quelconque des revendications 1 à 10, **caractérisé en ce qu'**un des tubes auxiliaires (6) sert à la fixation, de type charnière, d'un capuchon (17) de coussin à gaz et **en ce que** dans la région de l'autre tube auxiliaire (6), les pièces frontales (2) sont réalisées pour l'encliquetage du capuchon (17) du coussin à gaz.

12. Ensemble de pièces selon l'une quelconque des revendications 1 à 10, **caractérisé par** une couverture de protection déchirable, recouvrant la section transversale de sortie pour le coussin à gaz entre les tubes auxiliaires (6).

13. Ensemble de pièces selon l'une quelconque des revendications 1 à 10, **caractérisé en ce que** les pièces frontales (2) sont en matière plastique ou un alliage de métal léger.
